# EUROPEAN PATENT APPLICATION

(11) **EP 1 237 359 A2**
(43) Date of publication of application: **04.09.2002**
(21) Application number: 02250436.9
(22) Date of filing: 22.01.2002
(51) Int. Cl.: H04N 5/00

(54) **Remote control handset**

(30) Priority: 20.02.2001 GB 0104120
(71) Applicant: Pace Micro Technology Ltd, Saltaire, Shipley BD18 3LF (GB)
(72) Inventor: Sprowson, Robert, Macclesfield, Cheshire SK10 3DT (GB); Carr, Peter, Ely CB6 3YE (GB)
(74) Representative: Wood, Graham

(57) **Abstract**

A remote control handset (10) is provided for remote operation of a first item of electrical apparatus, such as a television set (2). The handset (10) has means for sending a signal to the TV set (2) to control at least one function thereof. The remote control handset (10) operates at least one further item of electrical apparatus, such as a broadcast data receiver (BDR) (4), and the TV set and the BDR communicate via a SCART connector. The remote control handset (10) is able to operate the BDR and the TV set by actuating the function switching pin (pin 8) (14) of the SCART connector.

## Description

This invention relates to a remote control handset for controlling at least one item of electrical apparatus.

Remote control handsets are provided with many items of electrical apparatus to allow operation of the apparatus. For example, remote controls are typically provided with television sets, broadcast data receivers, video recorders, stereos and/or the like. Since many users have all these items of electrical apparatus in a single room, this can result in at least three or four remote controls being required in the room. This can become confusing to the user, as the user needs to determine which remote control operates which item of electrical apparatus, particularly if some of the items of electrical apparatus are made by the same manufacturer and thus the remote controls are often similar in appearance.

It is known to provide universal remote control handsets which operate a number of items of electrical apparatus. A user is typically required to purchase a universal remote control handset and then program the handset using either a code supplied by the manufacturer of the electrical apparatus which can be keyed into the universal handset, or alternatively, the original remote control of the apparatus can be pointed at the universal handset to download code/functions therefrom to the universal handset. A problem with this method is that the universal handsets are expensive to buy and programming of the handsets can be time consuming.

It is therefore an aim of the present invention to provide a remote control handset which operates more than one item of electrical apparatus,which is inexpensive and simple to use.

According to a first aspect of the present invention there is provided a remote control handset for remote operation of a first item of electrical apparatus, said handset having means for sending a signal to the electrical apparatus to control at least one function of the said apparatus characterised in that said remote control handset operates at least one further item of electrical apparatus and said first item of apparatus and at least one further item of electrical apparatus communicate via a SCART connector, said first item of apparatus actuating the function switching pin (pin 8) of the SCART connector in response to a signal received from the remote control handset, thereby allowing the handset to be used to operate said first and said at least one further item of apparatus.

Thus in accordance with the present invention a single remote control handset can be used to operate either or all of the items of electrical apparatus communicating via the SCART connector.

Preferably the first item of electrical apparatus is either of a television set or broadcast data receiver and the at least one further item is the other of the two.

Preferably at least one key/button on the remote control handset is assigned to actuating SCART Pin 8.

Preferably actuation of SCART Pin 8 allows the same and/or similar functions performed by key/button operation of the remote control for the television, to be performed by the same/similar key/button operation of the remote control for the broadcast data receiver.

According to a second aspect of the present invention there is provided a television system, said television system including a at least a television display screen, a broadcast data receiver (BDR) and a remote control handset remote operation of said television display screen or said BDR, said handset having means for sending a signal to said television display screen or said BDR to control at least one function thereof, characterised in that said remote control handset operates at least the other of said television display screen or said BDR and said BDR and said television display screen communicate via a SCART connector, said BDR or television display screen actuating the function switching pin (pin 8) of the SCART connector, in response to a signal received from the remote control handset, thereby allowing the remote control handset to be used to operate said BDR and said television display screen.

The advantage of the present invention is that a single remote control handset can be used to operate at least two items of apparatus without the user being required to purchase a separate universal remote control handset. In addition, there is no requirement to undertake lengthy programming of the handset prior to use with the at least two items of electrical apparatus. The solution provided by the present invention is therefore an inexpensive and simple solution to the problem of having a plurality of separate handsets.

An embodiment of the present invention will now be described with reference to the accompanying figure wherein:

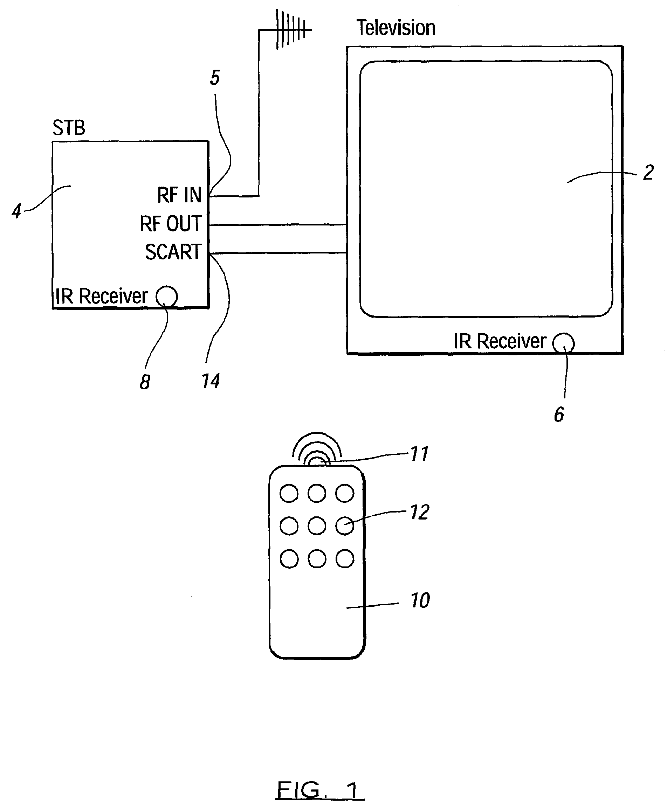

Figure 1 is a schematic view of an embodiment of the present invention.

Referring to figure 1, there is illustrated a television display screen 2 connected to a broadcast data receiver 4. The broadcast data receiver receives digital data from a remote source via satellite, cable and/or terrestrial means using at least one tuner 5. The digital data is in the form of audio/video and/or auxiliary data and the broadcast data receiver processes the data as video for display on display screen 2 or audio via speakers connected to the receiver.

Television display screen 2 and broadcast data receiver 4 are provided with infra-red remote control signal receivers 6 and 8.

Conventionally an infra-red remote control handset is provided for operation of the television display screen and a further handset is provided for operation of the broadcast data receiver.

In accordance with the present invention a single remote control handset 10 is provided which can control the functions of both the television 2 and the receiver 4. The remote control 10 has an infra-red transmitter 11 to signal to an item of electrical apparatus to perform a particular function.

A specific key 12 on the television remote control handset 10 is assigned for actuating the SCART Pin eight function 14 on the receiver 4. Actuation of the assigned key allows the receiver to be operated by the handset 10 whilst maintaining the required picture or current operation on or of the television display screen 2.

The receiver 4 is provided with the necessary hardware to decode the signal received from the television remote control. For example, the majority of television sets use RC-5 Codes for decoding the bit stream provided by the remote control signal. The broadcast data receiver is therefore also provided with the necessary hardware to decode RC-5 code and to allow mapping of the codes to the assigned functions in the receiver.

During installation of the broadcast data receiver 4 with the television set 2, a user can, for example, assign the operation of receiver 4 to button 12 on the television remote control handset 10. Thus when a user presses button 12 on the remote control 10 the SCART Pin eight 14 is actuated directly or via a signal sent from the BDR and the television set 2 is switched to audio/visual mode (AV mode) (i.e., the television is moved from a normal operating mode where the broadcast signal is demodulated by a tuner in the television set, to an AV mode, where the broadcast signal is received by a tuner in the broadcast data receiver and the television signal receives the broadcast signal via a SCART connector. In the latter case the television set is not required to demodulate the broadcast signal and the resulting displayed image is of improved quality). The user can then use the "programme up" and "programme down" keys to move the receiver 4 to an appropriate channel. When this happens, the television set 2 also moves channels. To overcome this, the receiver can de-assert and then re-assert SCART Pin 8 switching, thereby resulting in the TV switching back to AV mode.

De-assertion and re-assertion of the SCART Pin 8 can be undertaken by the user actuating the assigned SCART switch button on the remote control.

When the user presses a further channel button on the remote control, the receiver de-asserts pin 8 and returns the television set back to normal television controlled operation.

A single remote control handset can be used to operate more than two items of electrical apparatus providing the items of apparatus are all connected together via SCART connections. Thus the manufacturers of broadcast data receivers need not supply a handset as they can rely on the user utilising the television remote control handset. This therefore reduces the cost of the broadcast data receiver and/or other electrical apparatus.

Thus the reduction in the number of handsets required makes operation of the different items of apparatus by a user easier and less confusing.

## Claims

1. A remote control handset (10) for remote operation of a first item of electrical apparatus, said handset (10) having means for sending a signal to the electrical apparatus to control at least one function of said apparatus, **characterised in that** said remote control handset (10) operates at least one further item of electrical apparatus and said first item of apparatus and said at least one further item of electrical apparatus communicate via a SCART connector, said first item of apparatus actuating the function switching pin (pin 8) (14) of the SCART connector in response to a signal received from the remote control handset, thereby allowing the handset to be used to operate said first and said at least one further item of apparatus.

2. A remote control handset according to claim 1 **characterised in that** at least one button/key (12) on said handset (10) is assigned to actuating SCART pin 8 (14).

3. A remote control handset according to claim 1 **characterised in that** on actuation of said SCART pin (14), functions performed by key/button operation of the remote control handset (10) for said first item of electrical apparatus can be performed by the same or similar key/button operation of the remote control handset (10) for the at least further item of electrical apparatus.

4. A remote control handset according to claim 1 **characterised in that** said first item of electrical apparatus is a television display screen (2) or broadcast data receiver (4).

5. A remote control handset according to claim 2 **characterised in that** the at least one further item of electrical apparatus is the other of said television display screen (2) or broadcast data receiver (4).

6. A television system, said television system including at least a television display screen (2), a broadcast data receiver (BDR) (4) and a remote control handset (10) for remote operation of said television display screen (2) or said BDR (4), said handset (10) having means for sending a signal to said television display screen (2) or said BDR (4) to control at least one function thereof, **characterised in that** said remote control handset (10) operates at least the other of said television display screen (2) or said BDR (4) and said BDR (4) and said television display screen (2) communicate via a SCART connector, said BDR or television display screen actuating the function switching pin (pin 8) (14) of the SCART connector, in response to a signal received from the remote control handset, thereby allowing the remote control handset to be used to operate said BDR and said television display screen.
